**Europäisches Patentamt**

**European Patent Office**

**Office européen des brevets**

(11) Veröffentlichungsnummer: **0 542 011 A1**

# (12) EUROPÄISCHE PATENTANMELDUNG

(21) Anmeldenummer: **92118158.2**

(22) Anmeldetag: **23.10.92**

(51) Int. Cl.⁵: **G02B 6/42**

(30) Priorität: **09.11.91 DE 4136893**

(43) Veröffentlichungstag der Anmeldung:
**19.05.93 Patentblatt 93/20**

(84) Benannte Vertragsstaaten:
**AT CH DE ES FR GB GR IT LI PT SE**

(71) Anmelder: **ANT NACHRICHTENTECHNIK GMBH**
**Gerberstrasse 33**
**W‒7150 Backnang(DE)**

(72) Erfinder: **Bohnert, Werner, Dipl.‒Ing.**
**Schwarenbergstrasse 33**
**W‒7000 Stuttgart 1(DE)**
Erfinder: **Kuke, Albrecht, Dr. rer. nat.**
**Nelkenweg 2**
**W‒7159 Auenwald(DE)**
Erfinder: **Ludäscher, Udo, Dipl.‒Ing. (FH)**
**Seehofweg 114**
**W‒7150 Backnang(DE)**
Erfinder: **Wolf, Willi, Dipl.‒Phys.**
**Breslauer Strasse 16**
**W‒7150 Backnang(DE)**

(54) **Optische Sende‒ und Empfangsanordnung.**

㊗ Bei optischen Sende‒ und Empfangsanordnungen zum ein‒ und auskoppeln von Licht in einen Lichtwellenleiter ist es erwünscht hohe Einkopplungswirkungsgrade in Verbindung mit hohen Übersprechdämpfungen zu erzielen.

Es wird eine optische Sende‒ und Empfangsanordnung angegeben, bei der die Stirnfläche des Lichtwellenleiters schräg abgeschliffen ist und die longitudinale Achse des Lichtwellenleiter zur optischen Achse des Systems geneigt ist.

Über einen Strahlteiler ST wird Licht von einem optischen Sender S zu der Stirnfläche eines Lichtwellenleiters, der in einem Stecker Ste gefaßt ist, geleitet. Zwischen Sender S und Strahlteiler ST befindet sich eine Linse L1 und zwischen Strahlteiler St und der Stirnfläche des Lichtwellenleiters eine Linse L3, die zur Abbildung des ausgesendeten Lichtes auf die Stirnfläche des Lichtwellenleiters dienen. Wenn das System aus Linse L1 und Sender S eine hohe Rückflußdämpfung aufweist, so ist es sinnvoll, daß die erfindungsmemäße Anordnung mit dem schräg angeschliffenen Lichtwellenleiter verhindert, daß an der Stirnfläche des Lichtwellenleiters reflektiertes Licht in den Sender S fällt. Zwischen der Linse L3 und dem Lichtwellenleiter kann eine Blende BL angeordnet werden. Das an der Stirnfläche des Lichtwellenleiters reflektierte Licht fällt nicht durch die Blendöffnung sondern auf die Blende, die somit vermeidet, daß reflektiertes Licht auf den Empfänger E fällt. Zur Befestigung des Steckers Ste mit dem Lichtwellenleiter ist eine Steckerhalterung SH vorgesehen. Der Schliffwinkel der Faser beträgt beispielsweise 8°.

EP 0 542 011 A1

Fig. 1

Die Erfindung betrifft eine optische Sende – und Empfangsanordnung mit einem Licht aussendenden und einem Licht empfangenden optoelektrischen Bauelement und mit einem Lichtwellenleiter, in den Licht eingekoppelt bzw. aus dem Licht empfangen wird, wobei zwischen den optoelektrischen Bauelementen und dem Lichtwellenleiter ein Strahlteiler angeordnet ist.

Für Lichtwellenleiterübertragungssysteme werden als Sende – und/oder Empfangseinheit optische Sende – und Empfangsanordnungen eingesetzt. Aus der EP 238 977 A2 ist ein Sende – und Empfangs – modul für ein bidirektionales Kommunikationsnetz, insbesondere ein Breitband – ISDN, bekannt. Dieses Sende – und Empfangsmodul weist eine Laserdiode und einen Detektor auf. Zwischen der Laserdiode und dem Faserende sind zwei Kugellinsen mit Abstand voneinander angeordnet. Zwischen den Kugellinsen befindet sich eine Lichtstrahltrenneinrichtung, die dem Detektor Licht zuleitet. Die Lichtstrahltrenneinrichtung bildet einen 45° Winkel zur optischen Achse des Strahlengangs zwischen Laserdiode und Lichtwellenleiter. Aus der EP 429 337 A 1 ist es bekannt, daß der Strahlteiler auch derart angeordnet sein kann, daß zwischen der Flächennormale auf der Oberfläche des Strahlteilers und der optischen Achse ein Winkel < 45° eingeschlossen ist.

Bei optischen Sendeanordnungen ist es besonders wichtig, Rückreflexionen an spiegelnden Flächen in den Laser zu vermeiden. Aus der EP 400 161 A1 ist es bekannt, eine wesentliche Unterdrückung dieses Reflexes durch einen Schrägschliff der Stirnfläche des Lichtwellenleiters zu erreichen. Außerdem ist es aus dieser Schrift bekannt, zwischen Laser und Lichtwellenleiter zwei Linsen anzuordnen, wobei die optischen Achsen der Linsen gegenüber der optischen Achse des Lasers und auch gegenüber der optischen Achse des Lichtwellenleiters sowie gegeneinander axial versetzt sind.

Es ist Aufgabe der Erfindung eine optische Sende – und Empfangsanordnung anzugeben, die einen hohen Einkoppelwirkungsgrad bei hoher Übersprechdämpfung erzielt.

Die Erfindung wird durch eine Anordnung mit den Merkmalen des Patentanspruches 1 gelöst. Vorteil – hafte Weiterbildungen sind in den Unteransprüchen angegeben. Im Patentanspruch 2 wird angegeben, wie der Lichtwellenleiter zur genauen Fokussierung bewegbar ist. So wird eine laterale Dejustierung des Lichtwellenleiterkerns vermieden. Im Patentanspruch 3 ist angegeben, wie der Schielwinkel und der Schliffwinkel in idealer Weise Zusammenhängen sollten, um einen maximalen Einkoppelwirkungsgrad zu erreichen. Der Patentanspruch 4 betrifft eine vorteilhafte Ausgestaltung der Anordnung, die es ermöglicht, handelsübliche Stecker mit Lichtwellenleitern einzusetzen.

Durch den Schrägschliff der Lichtwellenleiterfläche und das gleichzeitige Schrägstellen der Lichtwel – lenleiterachse bezüglich der optischen Achse wird die Einfügedämpfung gering und die Übersprechdämp – fung hoch gehalten. Eine hohe Übersprechdämpfung bedeutet, daß die Reflexion von Licht aus dem Sender am Lichtwellenleiter und die Einkopplung in den Empfänger vermieden wird. Durch die schräge Öffnung wird erreicht, daß eine handelsübliche Hülse mit einem Lichtwellenleiter eingesetzt werden kann und daß ein üblicher Stecker eingesetzt werden kann. Durch die Befestigung des Steckers in einer Steckerhalterung, die entlang der optischen Achse bewegbar ist, erreicht man, daß eine laterale Dejustierung des Lichtwel – lenleiterkerns vermieden wird.

Einen maximalen Einkoppelwirkungsgrad erreicht man dann, wenn Schliffwinkel und Schielwinkel in einer festen Beziehung zueinander stehen. Es gilt

$$\delta = (\arcsin(\frac{n_1}{n_0} \cdot \sin \beta)) - \beta$$

wobei $\delta$ Schielwinkel und $\beta$ Schliffwinkel und $n_0$ Brechungindex des Mediums zwischen Faser und Strahlteiler und $n_1$ Brechungsindex des Lichtwellenleiters sind.

Zu dieser Formel kommt man unter Einsatz des Brechungsgesetzes von Snellius mit der Randbedin – gung, daß ein Lichtstrahl der auf der optischen Achse verläuft auf die longitudinale Achse des Lichtwellen – leiters gebrochen werden soll.

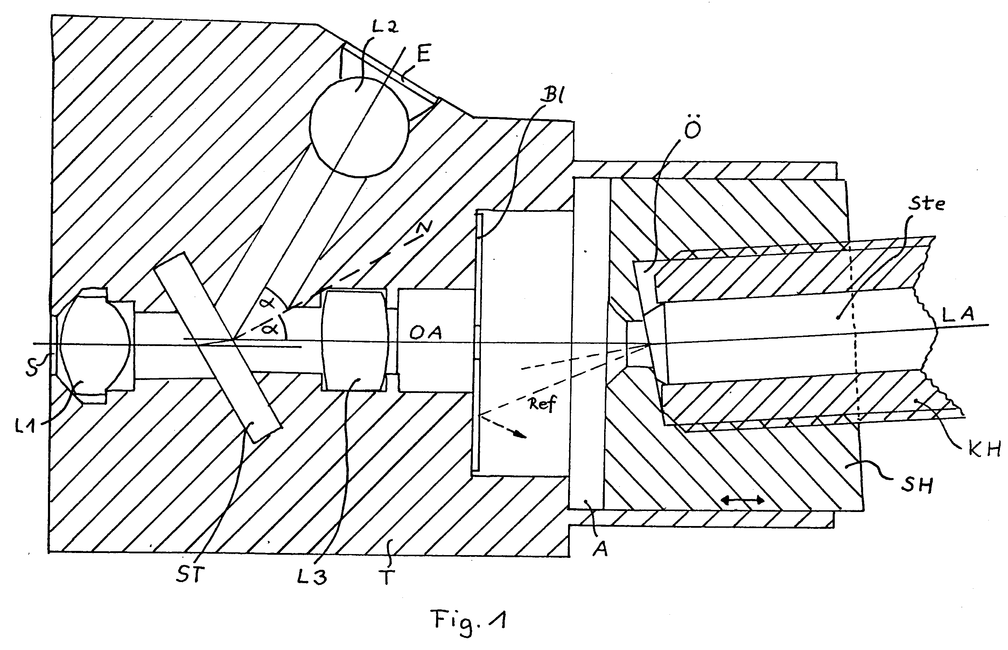

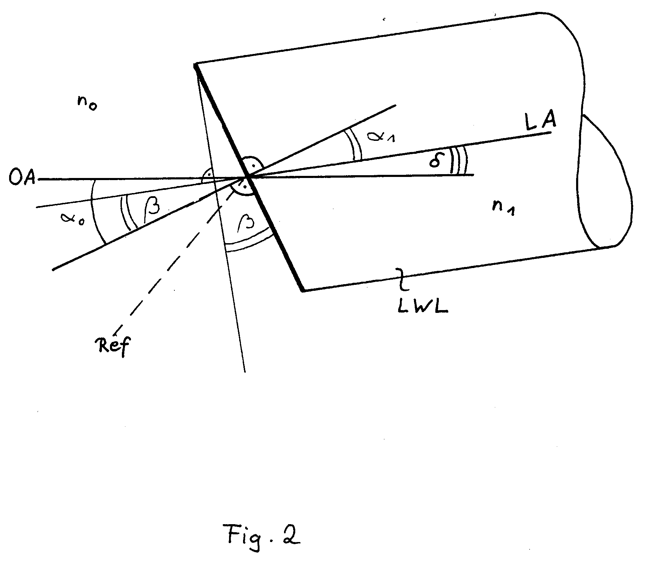

Anhand der Zeichnungen soll ein Ausführungsbeispiel der Erfindung erläutert werden. Es zeigen Figur 1 den Gesamtaufbau einer erfindungsgemäßen Anordnung und Figur 2 die Lage der optischen Achsen und der wichtigsten Winkel an der Stirnfläche des Lichtwellenleiters.

In Figur 1 ist ein mechanischer Träger T dargestellt, auf den die Komponenten der optischen Sende – und Empfangsanordnung montiert sind. Der Träger T weist Aussparungen zur Befestigung von optischen Komponenten und zur Ausbreitung des Lichtes auf.

Über einen Strahlteiler ST wird Licht von einem optischen Sender S zu der Stirnfläche eines Lichtwellenleiters, der in einem Stecker Ste gefaßt ist, geleitet. Zwischen Sender S und Strahlteiler ST befindet sich eine Linse L1 und zwischen Strahlteiler ST und der Stirnfläche des Lichtwellenleiters eine Linse L3, die zur Abbildung des ausgesendeten Lichtes auf die Stirnfläche des Lichtwellenleiters dienen. Wenn das System aus Linse L1 und Sender S eine hohe Rückflußdämpfung aufweist, so ist es sinnvoll, daß die erfindungsgemäße Anordnung mit dem schräg angeschliffenen Lichtwellenleiter verhindert, daß an der Stirnfläche des Lichtwellenleiters reflektiertes Licht in den Sender S fällt. Die Flächennormale N auf der Oberfläche des Strahlteilers ST ist um den Winkel $\alpha$ gegen die optische Achse OA der Linse 3 geneigt. Der Empfänger E und eine Linse L2, die sich zwischen dem Empfänger E und dem Strahlteiler ST befindet, sind derart angeordnet, daß die optische Achse der Linse L2 zur Flächennormale N auf der Oberfläche des Strahlteilers ST ebenfalls den Winkel $\alpha$ einschließt. Das auf der optischen Achse OA der Linse L3 einfallende Licht, wird also teilweise am Strahlteiler ST reflektiert und fällt somit auf den Empfänger E. Zwischen der Linse L3 und dem Lichtwellenleiter kann eine Blende BL angeordnet werden. Das an der Stirnfläche des Lichtwellenleiters reflektierte Licht fällt nicht durch die Blendenöffnung sondern auf die Blende, die somit vermeidet, daß reflektiertes Licht auf den Empfänger E fällt. Zur Befestigung des Steckers Ste mit dem Lichtwellenleiter ist eine Steckerhalterung SH vorgesehen. Diese Steckerhalterung befindet sich in einer Aussparung A des mechanischen Trägers, und ist in Richtung der optischen Achse der Linse L3 verschiebbar (s. Fig. 1). Durch diese Verschiebbarkeit der Steckerhalterung ist ein axiales Justieren des Lichtwellenleiters auf die optische Achse OA möglich. Die Steckerhalterung weist eine Öffnung Ö auf. Die Öffnung Ö ist mit einem Gewinde versehen, in das eine handelsübliche Kupplungshülse KH einschraubbar ist. In der Kupplungshülse KH ist ein handelsüblicher Lichtwellenleiterstecker Ste eingebracht. Es ist auch möglich den Steckerstift des Steckers Ste direkt in die Öffnung Ö der Steckerhaltung SH einzubringen, wobei die Öffnung Ö dann kein Gewinde aufweist, sondern paßgenau gearbeitet ist. Die Seitenwandungen der Öffnung E sind gegenüber der optischen Achse OA geneigt. Dadurch wird eine Neigung der longitudinalen Achse LA des Lichtwellenleiters gegenüber der optischen Achse OA erreicht. Die Stirnfläche des Lichtwellenleiters LWL ist schräg abgeschliffen. (s. Fig. 2). Der Schliffwinkel $\beta$, das heißt der Winkel zwischen der Normalen zur longitudinalen Achse des Lichtwellenleiters und der Stirnfläche des Lichtwellenleiters (bzw. der Winkel zwischen der longitudinalen Achse des Lichtwellenleiters und der Flächennormalen auf der Stirnfläche des Lichtwellenleiters) beträgt beispielsweise 8˚. Der Einfallswinkel beträgt $\alpha_0$ und der Reflexionswinkel beträgt $\alpha_1$. Der Schielwinkel zwischen der optischen Achse des Lichtwellenleiters LA und der optischen Achse der Linse L3 OA ist $\delta$. Mit $\alpha_0 = \alpha_1 + \delta$, $\alpha_1 = \beta$ und dem Brechungsgesetz von Snellius ergibt sich

$$\delta = (\arcsin((\sin \beta)\frac{n_1}{n_0})) - \beta.$$

Wenn man davon ausgeht, daß $n_0$ der Brechungsindex von Luft ist ($n_0 = 1$) und $n_1 = 1{,}47$ ist und daß es sich um kleine Winkel handelt, so gilt $\delta = \beta \cdot 0{,}47$. Für $\beta = 8˚$ bedeutet dies, daß $\delta = 3{,}76˚$.

**Patentansprüche**

1. Optische Sende- und Empfangsanordnung mit einem Licht aussendenden und einem Licht empfangenden optoelektrischen Bauelement (S, E) und mit einem Lichtwellenleiter, in den Licht eingekoppelt bzw. aus dem Licht empfangen wird, wobei zwischen den optoelektrischen Bauelementen (S, E) und dem Lichtwellenleiter ein Strahlteiler (ST) angeordnet ist, dadurch gekennzeichnet, daß die dem Strahlteiler (ST) zugewandte Stirnfläche des Lichtwellenleiters schräg abgeschliffen ist, wobei der Schliffwinkel $\beta$ ist, und daß die longitudinale Achse des Lichtwellenleiters (LA) zur optischen Achse des Systems aus Strahlteiler (ST) und den optoelektrischen Bauelementen (S, E) um den Schielwinkel $\delta$ geneigt angeordnet ist.

2. Optische Sende- und Empfangsanordnung nach Anspruch 1, dadurch gekennzeichnet, daß die Stirnfläche des Lichtwellenleiters in Richtung der optischen Achse des Systems (OA) bewegbar ist, wobei der Schielwinkel $\delta$ beibehalten wird.

3. Optische Sende- und Empfangsanordnung nach einem der Ansprüche 1 oder 2, dadurch gekenn-zeichnet, daß der Schielwinkel $\delta$

$$\delta = (\arcsin ((\sin \beta) \frac{n_1}{n_0} )) - \beta$$

wobei $n_1$ Brechungsindex des Lichtwellenleiters und $n_0$ Brechungsindex des Mediums zwischen Lichtwellenleiter und Strahlteiler (ST) sind.

4. Optische Sende − und Empfangsanordnung nach einem der Patentansprüche 1 bis 3, dadurch gekennzeichnet, daß der Lichtwellenleiter in einem Stecker (Ste) gefaßt ist, der in einer zur optischen Achse des Systems (OA) um den Schielwinkel $\delta$ geneigten Öffnung (Ö) befestigbar ist.

5. Optische Sende − und Empfangsanordnung nach Anspruch 4, dadurch gekennzeichnet, daß der Stecker (Ste) in einer Öffnung (Ö) einer Steckerhalterung (SH) schräg befestigbar ist und die Stecker − halterung (SH) entlang der optischen Achse des Systems (OA) bewegbar ist.

6. Optische Sende − und Empfangsanordnung nach einem der Ansprüche 1 bis 5, dadurch gekenn − zeichnet, daß die Flächennormale zur planen Oberfläche des Strahlteilers (ST) einen Winkel $\alpha$ zur optischen Achse des Systems (OA) bildet, wobei $\alpha < 45\degree$.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,D | EP-A-0 429 337 (THOMSON HYBRIDES) <br> * Spalte 5, Zeile 11 - Zeile 28; Abbildung 5 * <br> * Ansprüche * | 1 | G02B6/42 |
| A,D | *    idem   * | 6 | |
| Y | PATENT ABSTRACTS OF JAPAN <br> vol. 8, no. 264 (E-282)(1701) 4. Dezember 1984 <br> & JP-A-59 134 885 ( MATSUSHITA DENKI ) <br> * Zusammenfassung * | 1 | |
| A | DE-A-2 938 649 (AUSTRALIAN TELECOMMUNICATIONS COMMISSION) <br> * Seite 37, Zeile 15 - Zeile 23 * <br> * Ansprüche 1,5; Abbildungen 15,17,25 * | 1,3 | |
| A | PATENT ABSTRACTS OF JAPAN <br> vol. 7, no. 144 (E-183)(1289) 23. Juni 1983 <br> & JP-A-58 056 490 ( FUJITSU ) <br> * Zusammenfassung * | 1 | |

|  |  |  | RECHERCHIERTE SACHGEBIETE (Int. Cl.5) |
|---|---|---|---|
|  |  |  | G02B |

Der vorliegende Recherchenbericht wurde für alle Patentansprüche erstellt

| Recherchenort | Abschlußdatum der Recherche | Prüfer |
|---|---|---|
| DEN HAAG | 24 FEBRUAR 1993 | MATHYSSEK K. |